# EUROPÄISCHE PATENTANMELDUNG

(11) **EP 1 640 586 A1**
(43) Veröffentlichungstag der Anmeldung: **29.03.2006**
(21) Anmeldenummer: 04022591.4
(22) Anmeldetag: 22.09.2004
(51) Int. Cl.: F02C 7/12, F02C 7/16

(54) **Verfahren zur Leistungssteigerung einer bestehenden, stationären Gasturbine**

(71) Anmelder: SIEMENS AKTIENGESELLSCHAFT, 80333 München (DE)
(72) Erfinder: Beul, Ulrich, 59457 Essen (DE); Haje, Detlef, Dr., 02826 Görlitz (DE); Kachel, Carmen, 45470 Mülheim (DE); Sfar, Kais, 45481 Mülheim an der Ruhr (DE)

(57) **Zusammenfassung**

Es wird ein Verfahren zur Steigerung der Nennleistung einer bestehenden Gasturbine (1) mittels einer konstruktiven Umgestaltung vorgestellt, wobei die Gasturbine (1) beim Betrieb heißgasbeaufschlagte Bauteile (40) aufweist, welche mittels Kühlluft (KL) kühlbar sind.

Um eine dauerhafte Steigerung der Nennleistung der Gasturbine (1) zu erreichen, wird vorgeschlagen, dass zumindest teilweise die luftgekühlten Bauteile (40) durch dampfgekühlte Bauteile (62) ersetzt werden.

## Beschreibung

Die Erfindung betrifft ein Verfahren zur Steigerung der Nennleistung einer Gasturbine durch die konstruktive Umgestaltung der bestehenden, stationären Gasturbine, die heißgasbeaufschlagbare Bauteile aufweist, welche beim Betrieb mittels Kühlluft kühlbar sind.

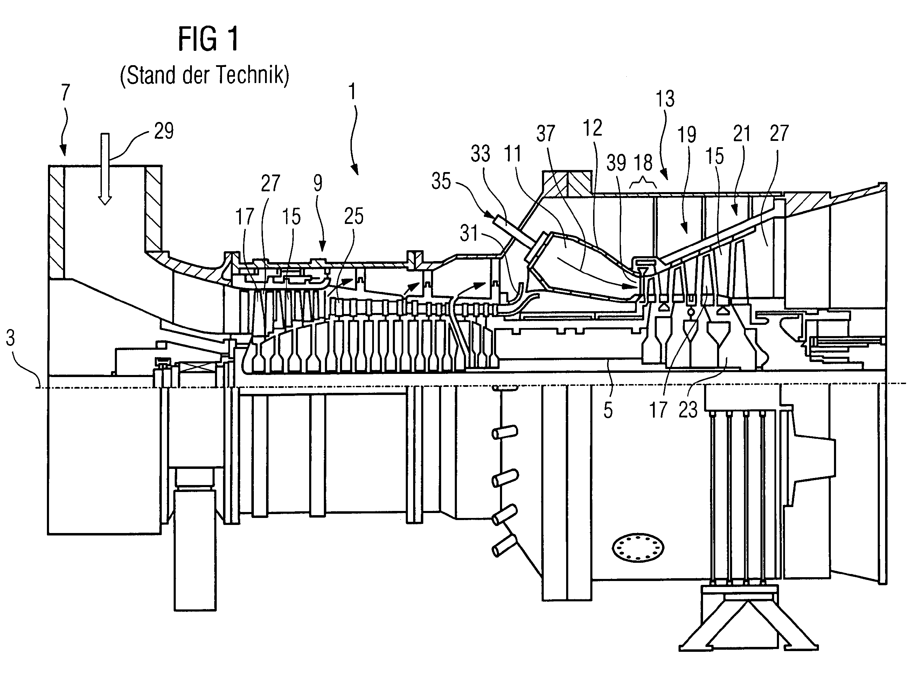

Eine aus dem Stand der Technik bekannte, luftgekühlte Gasturbine zur Energieerzeugung ist in FIG 1 gezeigt. Die Gasturbine 1 weist einen um eine Rotationsachse 3 drehbar gelagerten Rotor 5 auf, an dessen Längserstreckung aufeinander ein Ansaughaus 7, ein Verdichter 9, eine torusartige Ringbrennkammer 11 und eine Turbineneinheit 13 folgen.

Sowohl im Verdichter 9 als auch in der Turbineneinheit 13 sind Leitschaufeln 15 und Laufschaufeln 17 jeweils in Kränzen angeordnet. Im Verdichter 9 folgt einem Laufschaufelkranz 19 ein Leitschaufelkranz 21. Die Laufschaufeln 17 sind am Rotor 5 mittels Rotorscheiben 23 befestigt, wohingegen die Leitschaufeln 15 feststehend am Gehäuse 25 montiert sind.

Ebenso sind in der Turbineneinheit 13 Kränze 21 aus Leitschaufeln 15 angeordnet, denen jeweils in Richtung des Strömungsmediums gesehen ein Kranz aus Laufschaufeln 17 folgt. Dabei bildet ein Leitschaufelkranz zusammen mit einem in Strömungsrichtung gesehen nachfolgenden Laufschaufelkranz eine Turbinestufe 18.

Beim Betrieb der Gasturbine 1 wird vom Verdichter Luft 29 durch das Ansaughaus 7 angesaugt und verdichtet. Am Austritt 31 des Verdichters 9 wird die verdichtete Luft 29 in zwei Massenströme aufgeteilt.

Ein erster, kleiner Massenstrom der verdichteten Luft wird sowohl zur Kühlung der Ringbrennkammer 11 als auch zur Kühlung der Leitschaufeln 15 und Laufschaufeln 17 der Turbineneinheit 13 eingesetzt.

Ein zweiter, größerer Massenstrom wird zu den Brennern 33 geführt, welche auf einem Ring liegend an der Ringbrennkammer 11 vorgesehen sind. In den Brennern 33 wird die verdichtete Luft 29 mit einem Brennmittel 35 vermischt, welches Gemisch in der Ringbrennkammer 11 zu einem Heißgas 37 verbrannt wird. Anschließend strömt das Heißgas 37 durch den Strömungskanal 27 der Turbineneinheit 13 an Leitschaufeln 15 und Laufschaufeln 17 vorbei. Dabei entspannt sich das Heißgas 37 an den Laufschaufeln 17 der Turbineneinheit 13 arbeitsleistend. Hierdurch wird der Rotor 5 der Gasturbine 1 in eine Drehbewegung versetzt, die den Verdichter 9 und einen nicht dargestellten Stromerzeuger, d.h. einen elektrischen Generator, antreiben. Damit der Generator eine elektrische Spannung mit einer konstanten Frequenz von 50Hz bzw. 60Hz erzeugt, muss die Gasturbine mit einer konstanten Nenndrehzahl von 3000 min⁻¹ (bzw. 3600 min⁻¹) betrieben werden.

Nachteilig an der stationären Gasturbine ist, dass die Gasturbine für eine konstante Nennleistung bei Nenndrehzahl ausgelegt ist. Eine Veränderung dieser Nennleistung, insbesondere eine signifikante Steigerung dieser Nennleistung, ist im Allgemeinen nur sehr eingeschränkt möglich.

Eine Möglichkeit zur Steigerung der Nennleistung ist das so genannte Überfeuern der Gasturbine. Dabei wird lediglich für eine kurze Zeitdauer die Verbrennungstemperatur und damit die Temperatur des Heißgases am Eintritt in die Turbineneinheit geringfügig erhöht, was zu einer Steigerung der in der Turbineneinheit umgesetzten und abgegebenen Leistung führt. Die Überfeuerung ist jedoch lediglich nur kurzzeitig einsetzbar und reduziert darüber hinaus die Lebensdauer der dem Heißgas ausgesetzten Bauteile.

Aufgabe der vorliegenden Erfindung ist es, ein Verfahren zur signifikanten Steigerung der Nennleistung einer bestehenden Gasturbine anzugeben, ohne die Lebensdauer der Bauteile zu beeinträchtigen.

Die Aufgabe wird durch die Merkmale des Anspruchs 1 und durch die Merkmale der Anspruchs 2 gelöst.

Die erste Lösung schlägt vor, dass zumindest bei einem Teil der luftgekühlten Bauteile anstelle von Kühlluft Kühldampf eingesetzt wird.

Die zweite Lösung schlägt vor, dass bei einer konstruktiven Umgestaltung der Gasturbine ein Teil der luftgekühlten Bauteile bzw. Baugruppen durch konstruktiv umgestaltete Komponenten ersetzt werden, von denen eine Komponente zumindest ein Kühldampfkanalsystem zur Führung eines Kühldampfes aufweist.

Beide Lösungen gehen dabei von der Erkenntnis aus, dass durch die deutliche Einsparung von vom Verdichter bereitgestellter Kühlluft der die Turbineneinheit durchströmende Massenstrom wesentlich erhöht werden kann, was an dieser Stelle zu einer erheblichen, dauerhaften Steigerung der Strömungsenergie und somit auch der Nennleistung der Gasturbine führt.

Anstelle der luftgekühlten Bauteile werden bei der modifizierten bzw. umgestalteten Gasturbine, zumindest teilweise, dampfgekühlte Komponenten eingesetzt. Neben der Kühllufteinsparung, welche zur Erhöhung des wirksam genutzten Massenstromes führt, weist die Verwendung von Kühldampf als Kühlfluid gegenüber Luft mehrere Vorteile auf: Kühldampf hat eine höhere Wärmekapazität und bietet somit eine höhere Kühleffektivität. Dadurch ist die zur Kühlung notwendigerweise bereitzustellende und abzuführende Kühlfluid-Menge geringer als bei einer Kühlung mit Luft. Ferner ist aufgrund der effektiveren Kühlung zum einen ein Heißgas mit einer höheren Temperatur in der Gasturbine führbar, ohne dass es zum Versagen der heißgasbeaufschlagten Komponenten kommt. Zum anderen bewirkt die konstruktive Umgestaltung und das effektivere Kühlverfahren eine geringere Abkühlung des Heißgases, insbesondere dadurch, wenn keine Vermischung von Kühldampf und Heißgas stattfindet, wie es bei einer offenen Luftkühlung der Fall ist. Daher kann trotz einer gleichbleibenden Verbrennungstemperatur des Heißgases in der Brennkammer, dessen Temperatur am Turbineneintritt im Vergleich zur rein luftgekühlten Gasturbine dauerhaft erhöht werden, was die Nennleistung der Gasturbine steigert. Alternativ könnte auch die Verbrennungstemperatur in der Brennkammer im Vergleich zu einer Gasturbine aus dem Stand der Technik bei gleichbleibender Turbinen-Eintrittstemperatur reduziert werden, welches sich positiv auf den NOₓ-Anteil im Heißgas auswirkt, das heißt, der NOₓ-Anteil kann vermindert werden.

Außerdem kann aufgrund der effektiveren Kühlung eine Oxidation der gegebenenfalls metallischen Komponenten bzw. Komponentengruppen zumindest deutlich verringert werden, so dass die Komponenten keine Diffusions- oder Anschlussschicht zur Aufbringung einer Wärmedämmschicht benötigen. Folglich kann die Wärmedämmschicht mit Hilfe eines einfacheren Beschichtungsverfahrens, insbesondere atmosphärisch, aufgetragen werden. Dies führt zu einer Kosteneinsparung bei der Herstellung der dampfgekühlten Komponenten.

Die luftgekühlten Bauteile weisen bisher teilweise recht aufwändige und filigran gestaltete, innen liegende Kühlluftkanalsysteme mit Turbulatoren, Rippen, Dimpels und/oder ähnlichem auf, die nun entfallen können. Durch die effizientere Kühlung mittels Kühldampf kann die zur Kühlung der Komponenten innen liegende Kühldampfkanalstruktur bzw. das Kühldampfkanalsystem wesentlich vereinfacht, d.h. beispielsweise eben, ausgestaltet werden. Bei der Herstellung der dampfgekühlten Komponenten, verglichen mit den bisher luftgekühlten Bauteilen, führt dies zu einem Kostenvorteil.

Vorteilhafte Ausgestaltungen sind in den Unteransprüchen angegeben.

Eine vorteilhafte Ausgestaltung der Erfindung schlägt vor, dass bei der konstruktiven Umgestaltung die bereits bestehenden Versorgungsleitungen für Kühlluft mit ihrem ersten Ende an eine Eingangsöffnung des Kühldampfkanalsystems der Komponente zum Versorgen der Komponente mit Kühldampf angeschlossen werden und dass ein dem ersten Ende der Versorgungsleitungen gegenüberliegendes zweites Ende an eine Speiseeinrichtung für Kühldampf angeschlossen wird, um den beim Betrieb zur Kühlung nötigen Kühldampf zu den Komponenten oder Bauteilen zu transportieren. Folglich sind nur geringfügige Änderungen in der Zuführung nötig.

In einer besonders vorteilhaften Ausgestaltung der Erfindung sieht das Verfahren vor, dass bei der konstruktiven Ausgestaltung Entsorgungsleitungen in die Gasturbine eingebaut werden, welche mit ihrem ersten Ende an eine Ausgangsöffnung des Kühldampfkanalsystems der Komponenten angeschlossen und mit ihrem, dem ersten Ende gegenüberliegende zweiten Ende an einer Entsorgungseinrichtung angeschlossen werden, um den beim Betrieb aufgeheizten Kühldampf aus der Gasturbine abzutransportieren. Durch den geschlossenen Dampfkühlkreislauf werden Dampfleckagen vermieden. Die Temperatur des Kühldampfes wird durch die Aufnahme der Wärmestrahlung aus den Komponenten erhöht, so dass eine Weiterverwendung des verbrauchten, d.h. erwärmten, Kühldampfes in weiteren Prozessschritten, insbesondere in einem kombinierten Gas- und Dampfturbinen-Kraftwerk, gewinnbringend genutzt werden kann.

Gemäß einem vorteilhaften Vorschlag der Erfindung sind die zu ersetzenden Bauteile luftgekühlte Turbinenschaufeln, Brennkammerhitzeschilde und/oder Führungsringe, welche durch zumindest teilweise dampfgekühlte gleiche Komponenten ersetzt werden.

Die Erfindung wird anhand einer Zeichnung erläutert, dabei zeigt:
- Fig. 1: eine Gasturbine in einem Längsteilquerschnitt aus dem Stand der Technik,
- Fig. 2: eine luftgekühlte Turbinenschaufel im Längsquerschnitt,
- Fig. 3: eine luft- und dampfgekühlte Turbinenschaufel und
- Fig. 4: einen Rotor einer Gasturbine in einem Längsquerschnitt.

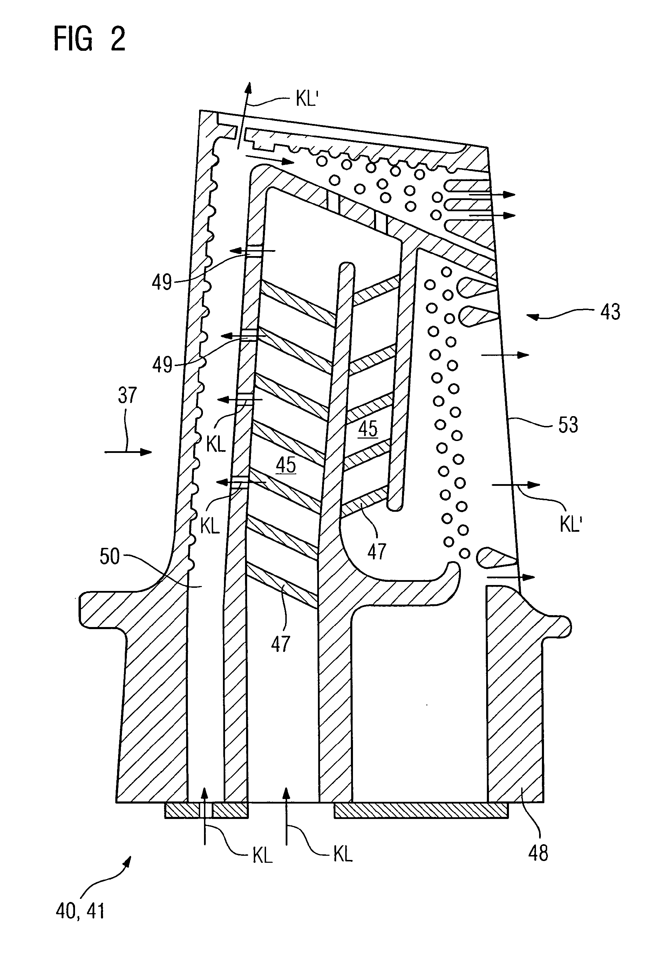

Fig. 2 zeigt als luftgekühltes Bauteil 40 eine Turbinenschaufel 41 aus dem bekannten Stand der Technik. Die Turbinenschaufel 41 weist mehrere, sich durch ein Schaufelprofil 43 der Turbinenschaufel 41 erstreckende, zum Teil mäanderförmig geführte Kühlkanäle 45 auf, in welchen den Wärmeübergang anfachende Turbulatoren 47 und Prallkühlelemente 49 vorgesehen sind. Die Kühlluft KL wird durch einen Schaufelfuß 48 der Turbinenschaufel 41 zugeführt und durch ein Kühlluftkanalsystem 50 geleitet. An einer, bezogen auf die Strömungsrichtung des Heißgases 37 abströmseitigen Kante 53 der Turbinenschaufel 41 wird die sich beim Durchströmen der Turbinenschaufel 41 aufheizende Kühlluft KL' ausgeblasen (offene Kühlung), so dass sich die erwärmte Kühlluft KL' mit dem Heißgas 37 vermischt und die Heißgastemperatur mindert.

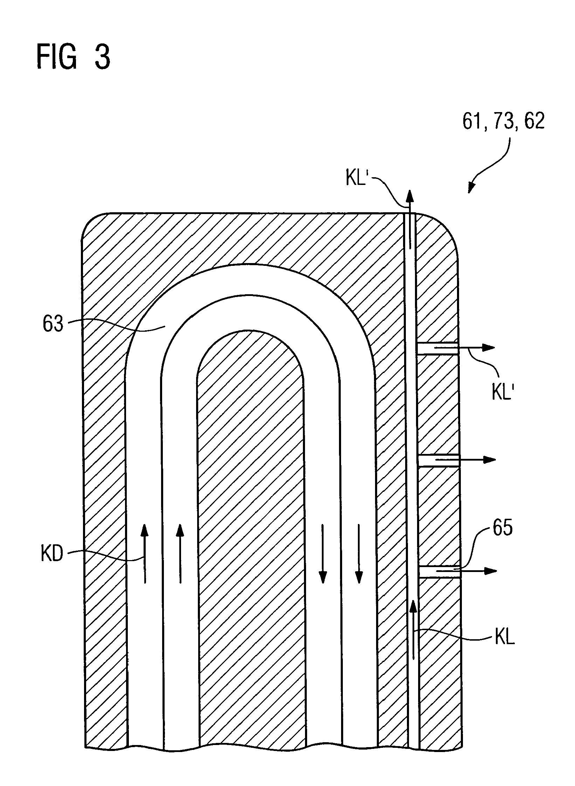

Zur dauerhaften Nennleistungssteigerung einer aus dem bekannten Stand der Technik bestehenden Gasturbine 1 können beispielsweise lediglich luftgekühlte Turbinenschaufeln 41, welche vorzugsweise in der in Strömungsrichtung gesehen ersten oder zweiten Turbinenstufe eingesetzt sind, durch dampf- und luftgekühlte Turbinenschaufeln 61 als Komponenten 62 ersetzt werden. Eine solche dampf- und luftgekühlte Turbinenschaufel 61 ist in Fig. 3 gezeigt.

Die Turbinenschaufel 61 weist neben einem offenen Luftkühlkanalsystem 65 ein geschlossenes Kühldampfkanalsystem 63 zur Führung von Kühldampf KD auf. Beim offenen Kühlsystem wird das verbrauchte Kühlmedium in den Heißgasstrom ausgeblasen, wohingegen bei dem geschlossenen Kühlsystem das Kühlmedium aus dem zu kühlenden Bereich abtransportiert und zu einer Verwertungseinrichtung, beispielsweise zu einer Dampfturbine abtransportiert wird.

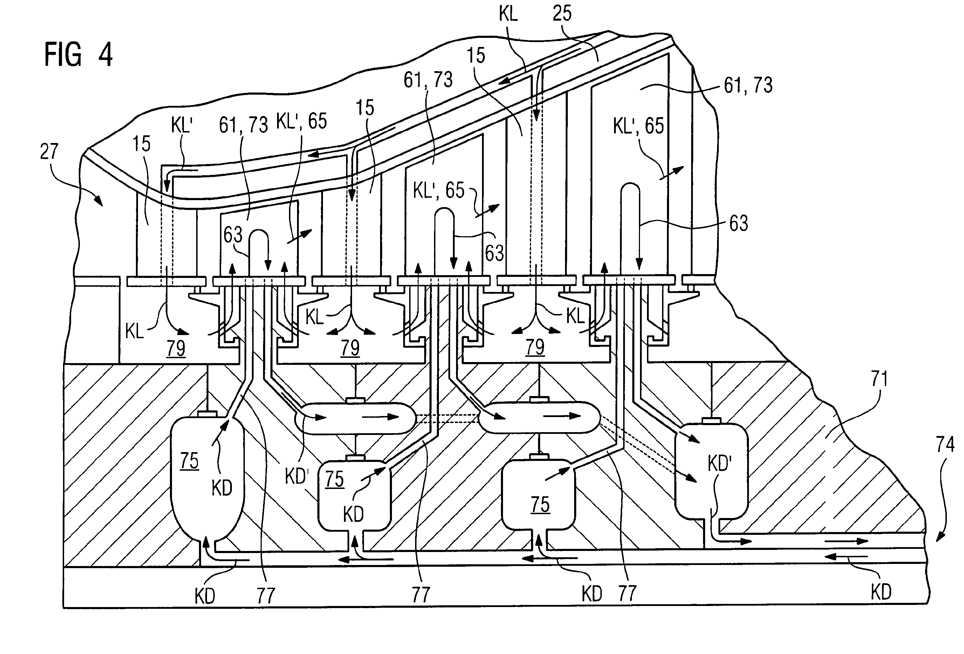

Der Einsatz von luft- und dampfgekühlten Turbinenschaufeln 61 ist in Fig. 4 als in der Turbineneinheit 13 eingesetzten Laufschaufeln 73 gezeigt.

Um beim Betrieb der Gasturbine die Laufschaufeln 73 mit frischem Kühldampf KD zu versorgen, wird während der konstruktiven Umgestaltung der bisher luftgekühlten Gasturbine 1 ein modifizierter Rotor 71 mit einem integrierten Kanalsystem 74 zum Ver- und Entsorgen von Laufschaufeln 73 mit Kühldampf KD montiert.

Frischer, d.h. noch nicht zu Kühlung eingesetzter, Kühldampf KD wird in das Kanalsystem 74 des Rotor 71 an seiner Stirnseite eingespeist. Anschließend strömt der Kühldampf KD in einem Ringraum entlang des Rotors 71. Zwischen unmittelbar benachbarten Rotorscheiben 23 sind radial verlaufende Strömungspassagen, Hohlräume 75 vorgesehen, welche den Kühldampf KD weiter führen. Von den Hohlräumen 75 leiten in den Rotorscheiben 23 liegende Kanäle 77 den Kühldampf KD weiter zu den Laufschaufeln 73, gemäß den mit KD bezeichneten Pfeilen.

Der im Kühldampfkanalsystem 63 der Turbinenschaufel 61 geführte Kühldampf KD kühlt dann die Laufschaufeln 73. Der sich dabei erwärmende Kühldampf KD wird anschließend als Brauchdampf KD' radial nach innen in den Rotor 71 geführt und zu einer Dampfturbine abtransportiert.

Die weiterhin für die Laufschaufeln 73 zur Verfügung gestellte Kühlluft KL wird durch die Leitschaufeln 15 aus dem Gehäuse 25 in Richtung des Rotors 71 geführt, wo in einem Übergangsbereich 79 die Kühlluft KL aus dem drehfesten System in den Rotor 71 übergeht. Im Innern des Rotors 71 strömt die Kühlluft KL zu den Laufschaufeln 73 und weiter in das Luftkühlkanalsystem 65 der dem Heißgas 37 ausgesetzten Laufschaufeln 73. Je nach Ausgestaltung der Laufschaufeln 73 kann die Kühlung mit Kühlluft KL auch entfallen.

Eine weitere Möglichkeit zur Umgestaltung sieht den Ersatz von Kühlluft KL durch Kühldampf KD vor. Hierzu müsste beim Umrüsten lediglich die bisher für Kühlluft KL eingesetzten Versorgungsleitungen vom Verdichter getrennt und an eine Dampfspeiseeinrichtung angeschlossen werden, damit Kühldampf KD zu den Laufschaufeln 73 geführt werden kann. Die bisher luftgekühlten Bauteile 40 würden somit auf Dampfkühlung umgestellt werden.

Der Kühldampf KD wird einer Speiseeinrichtung, beispielsweise aus einer kalten Zwischenüberhitzungsleitung eines Dampfkraftwerkes, entnommen und der umgerüsteten Gasturbine durch Kühldampf-Versorgungsleitungen, beispielsweise Kanalsysteme 74, zugeführt. Nach dem in der Gasturbine der Kühldampf KD durch die Wärmeaufnahme seinen Energiegehalt erhöht hat, kann dieser als erwärmter Kühldampf KD' dem Dampfkraftwerk zur weiteren Nutzung zurückgeführt werden.

Durch den Austausch von rein luftgekühlten Turbinenschaufeln 41 gegen zumindest dampfgekühlte Turbinenschaufeln 61 kann die Entnahme von Kühlluft KL aus dem Verdichterluftstrom in deutlichem Umfang reduziert werden. Die dadurch eingesparte Kühlluft KL steht dem Verbrennungsvorgang der umgerüsteten Gasturbine zusätzlich zur Verfügung, was zur Steigerung der Nennleistung durch Erhöhung des die Turbineneinheit 13 durchströmenden Heißgas-Massenstromes genutzt wird. Gleichfalls Kann die Gasturbine durch die effizientere Kunlwirkung des Kühldampfes KD mit einer höheren Heißgastemperatur sowohl in der Ringbrennkammer 11 als auch am Turbineneintritt 39 betrieben werden, was gegenüber der vorher bestehenden Gasturbine 1 zu einer Wirkungsgradsteigerung führt.

Selbstverständlich können anstelle oder zusätzlich von luftgekühlten Laufschaufeln natürlich auch luftgekühlte Leitschaufeln der Turbineneinheit durch zumindest teilweise dampfgekühlte Leitschaufeln ersetzt werden.

In vergleichbarer Weise können luftgekühlte Hitzeschilde 12 der Ringbrennkammer 11 durch zumindest teilweise dampfgekühlte Hitzeschilde ersetzt werden, um in weiterem Ausmaß Kühlluft KL einzusparen.

Durch das Umrüsten einer rein luftgekühlten Gasturbine in eine zumindest teilweise dampfgekühlten Gasturbine kann die Nennleistung der Gasturbine dauerhaft erhöht werden. Es sind lediglich die in der Turbineneinheit und oder Brennkammer eingesetzten Bauteile bzw. Baugruppen auf Dampfkühlung umzurüsten, wohingegen andere Elemente der bestehenden Gasturbine wie Ansaughaus, Verdichter und Gehäuse während und nach der Umgestaltung unverändert bleiben.

## Patentansprüche

1. Verfahren zur Steigerung der Nennleistung einer Gasturbine (1) durch konstruktive Umgestaltung einer bestehenden, stationären Gasturbine (1),
die heißgasbeaufschlagbare Bauteile (40) aufweist, welche beim Betrieb mittels Kühlluft (KL) kühlbar sind,
**dadurch gekennzeichnet,**
**dass** zumindest bei einem Teil der luftgekühlten Bauteile (40) anstelle von Kühlluft Kühldampf eingesetzt wird.

2. Verfahren zur Steigerung der Nennleistung einer Gasturbine (1) durch konstruktive Umgestaltung einer bestehenden, stationären Gasturbine (1),
die heißgasbeaufschlagbare Bauteile (40) aufweist, welche beim Betrieb mittels Kühlluft (KL) kühlbar sind,
**dadurch gekennzeichnet,**
**dass** mindestens ein Teil der luftgekühlten Bauteile (40) durch konstruktiv umgestaltete Komponenten (62) ersetzt wird, von denen mindestens eine Komponente (62) zumindest ein Kühldampfkanalsystem (63) zur Führung eines Kühldampfes (KD) aufweist.

3. Verfahren nach Anspruch 1 oder 2,
**dadurch gekennzeichnet,**
**dass** die bereits bestehenden Versorgungsleitungen für Kühlluft (KL) mit ihrem ersten Ende an das Kühldampfkanalsystem (63) der Komponente (62) zum Versorgen der Komponente (62) mit Kühldampf (KD) angeschlossen werden und das dem ersten Ende der Versorgungsleitungen gegenüberliegende zweite Ende an eine Speiseeinrichtung für Kühldampf (KD) angeschlossen wird, um den beim Betrieb zur Kühlung nötigen Kühldampf (KD) zu den Komponenten (62) oder Bauteilen (40) zu transportieren.

4. Verfahren nach Anspruch 1 oder 2,
**dadurch gekennzeichnet,**
**dass** Entsorgungsleitungen in die Gasturbine eingebaut werden, welche mit ihrem ersten Ende an das Kühldampfkanalsystem (63) kühlbaren Komponenten (62) in der Gasturbine (1) angeschlossen werden und mit ihrem, dem ersten Ende gegenüberliegenden zweiten Ende an einer Entsorgungseinrichtung angeschlossen werden, um den beim Betrieb aufgeheizten Kühldampf (KD) aus der Gasturbine (1) zu transportieren.

5. Verfahren nach einem der Ansprüche 1 bis 4,
**dadurch gekennzeichnet,**
**dass** die zu ersetzenden Bauteile (40) in der Gasturbine (1) befestigte luftgekühlte Turbinenschaufeln, Brennkammerhitzeschilder (12) und/oder Führungsringe sind, welche durch zumindest teilweise dampfgekühlte Turbinenschaufeln (41), Brennkammerhitzeschildern und/oder Führungsringe ausgebildete Komponenten ersetzt werden.

6. Verfahren nach einem der Ansprüche 1 bis 5, **dadurch gekennzeichnet,**
**dass** bei der konstruktiven Umgestaltung die offen gekühlten Bauteile (40) gegen Komponenten (62) mit einem geschlossenen Kühldampfkanalsystem (63) ersetzt werden.
